# EUROPÄISCHE PATENTSCHRIFT

(11) **EP 2 912 351 B1**
(45) Veröffentlichungstag und Bekanntmachung des Hinweises auf die Patenterteilung: **15.03.2017**
(21) Anmeldenummer: 13783909.8
(22) Anmeldetag: 28.10.2013
(51) Int. Cl.: F16J 9/18, F16J 9/26, F16J 9/28

(54) **KOLBENRING**
PISTON RING
BAGUE DE PISTON

(30) Priorität: 26.10.2012 EP 12190280
(43) Veröffentlichungstag der Anmeldung: 02.09.2015
(73) Patentinhaber: Burckhardt Compression AG, 8404 Winterthur (CH)
(72) Erfinder: FEISTEL, Norbert, CH-8548 Ellikon a.d. Thur (CH)
(74) Vertreter: Dr. Graf & Partner AG
(86) Internationale Anmeldenummer: PCT/EP2013/072520
(87) Internationale Veröffentlichungsnummer: WO 2014/064291

(56) Entgegenhaltungen:
- EP-A1- 1 275 888
- WO-A1-2007/073684
- DE-U1- 20 211 694
- GB-A- 129 193
- US-A- 1 419 781

## Beschreibung

Die Erfindung betrifft einen Kolbenring.

### Stand der Technik

Zum Verdichten von Fluiden wie Gasen oder Dämpfen eignen sich insbesondere trockenlaufende Kolbenverdichter. Als Kolbendichtelemente werden bei solchen Kolbenverdichtern vorzugsweise Kolbenringe aus Kunststoff verwendet, beispielsweise einteilige Kolbenringe mit einem geraden oder einem schrägen Stoss. Derartige einteilige Kolbenringe weisen den Nachteil auf, dass der während dem Betrieb des Kolbenverdichters auftretende Verschleiss der Kolbenringe zu einer Vergrösserung des Abstands zwischen den beiden Stossenden des Kolbenrings führt, was eine Reduzierung der Dichtwirkung zur Folge hat. Insbesondere bei der Kompression leichter Gase wie beispielsweise Wasserstoff hat diese Vergrösserung des Stossspiels zur Folge, dass bereits nach einer relativ kurzen Betriebsdauer eine hohe Leckage am Kolbenring auftritt, so dass die Kolbenringe bereits nach relativ kurzer Betriebsdauer ersetzt werden müssen.

Die Druckschrift EP 1275888A1 offenbart einen Kolbenring, einen sogenannten Twinring, der in der Lage ist auch mit fortschreitendem Verschleiss eine gewisse Dichtwirkung aufrecht zu erhalten. Dieser Twinring umfasst einen einteiligen Dichtring mit geradem Stoss, und umfasst einen einteiligen, L-förmigen Deckring, der den Dichtring in axialer als auch in radialer Richtung abgedeckt. Der Umfang des Dichtrings und des Deckrings erstreckt sich je über etwa 340 Grad, so dass die Verschleisskompensation durch ein elastisches Biegen erfolgt. Ein derartiger Twinring weist den Nachteil auf, dass sich die Dichtwirkung nach einer gewissen Zeit reduziert. Zudem besteht die Gefahr, dass ein derartiger Twinring bricht. Zudem sind die Herstellungskosten eines derartigen Twinrings relativ hoch. Die Druckschriften GB129193A und US 1419781 offenbaren je einen Kolbenring. Diese Kolbenringe weisen die Nachteile auf, dass deren Montage schwierig ist, dass eine Bruchgefahr besteht, dass sie relativ teuer herzustellen sind, und dass sie zur Abdichtung hoher Drücke nicht geeignet sind.

### Darstellung der Erfindung

Aufgabe der Erfindung ist es einen wirtschaftlich vorteilhafteren Kolbenring auszubilden.

Diese Aufgabe wird gelöst mit einem Kolbenring aufweisend die Merkmale von Anspruch 1. Die Unteransprüche betreffen weitere vorteilhafte Ausgestaltungen.

Die Aufgabe wird insbesondere gelöst mit einem Kolbenring für einen Kolbenkompressor, umfassend einen einteiligen, sich um einen Mittelpunkt mit Achsrichtung in einer Umfangsrichtung erstreckenden Dichtring mit einer kreisbogenförmig verlaufenden Aussenfläche, wobei der Dichtring einen geraden Stoss mit Stossenden sowie einen zwischen den Stossenden in Umfangsrichtung D verlaufenden Spalt aufweist, sowie umfassend ein Stossschloss zum Abdichten des Spaltes, wobei das Stossschloss symmetrisch bezüglich einer Symmetrieebene ausgestaltet ist, wobei das Stossschloss ausgehend von der Symmetrieebene zwei sich beidseitig in Umfangsrichtung erstreckende Stossschlossschenkelteile aufweist, wobei sich die beiden Stossschlossschenkelteile insgesamt über einen Winkelbereich zwischen 20° und maximal 180° erstrecken, und wobei die Stossschlossschenkelteile eine radial nach Aussen gerichtete, kreisbogenförmig verlaufende Schenkelteilaussenseite aufweisen, und wobei das Stossschloss ausgehend von der Symmetrieebene ein sich beidseitig in Umfangsrichtung erstreckendes, in Achsrichtung über die Stossschlossschenkelteile vorstehendes Anlageteil aufweist, wobei sich das Anlageteil in Umfangsrichtung nur über einen Teilwinkel der beiden Stossschlossschenkelteile erstreckt, und wobei das Anlageteil eine radial nach Aussen gerichtete Anlagefläche aufweist, und wobei die Anlagefläche bezüglich der Schenkelteilaussenseite in radialer Richtung zurückversetzt verläuft, sodass die Stossschlossschenkelteile entlang der Anlagefläche einen in Achsrichtung ausgerichteten Anschlag ausbilden, wobei der Dichtring und das Stossschloss derart gegenseitig angepasst ausgestaltet sind, dass in zusammengebautem Zustand das Stossschloss über den Anschlag seitlich am Dichtring anliegt, und dass die Anlagefläche des Anlageteils entlang des Spaltes verläuft und diesen in Umfangsrichtung abdeckt. Die symmetrische Ausgestaltung des Stossschlosses weist den Vorteil auf, dass im Bereich des Stossschlosses beziehungsweise des Spaltes des Dichtringes symmetrische oder im Wesentlichen symmetrische Kräfte auftreten, was einen insbesondere gleichmässigen Materialabtrag am Dichtring zur Folge hat, sodass die Dichtwirkung des Kolbenrings langfristig sichergestellt ist.

Der erfindungsgemässe Kolbenring weist den Vorteil auf, dass dieser eine vom Verschleiss des Kolbenrings unabhängige Dichtwirkung aufweist. Der erfindungsgemässe Kolbenring umfasst einen einteiligen Dichtring mit einem Stoss mit einem Spalt, und umfasst ein Stossschloss, welches den Stoss beziehungsweise den Spalt des Dichtringes abdichtet. Das Stossschloss ist bezüglich dem Dichtring verschiebbar gelagert. Die über dem Kolbenring anliegende Druckdifferenz hat zur Folge, dass eine radial nach Aussen wirkende Kraft am Stossschloss anliegt, was zur Folge hat, dass sich das Stossschloss wohl abnutzen kann, aber dass das Stossschloss auf Grund der radial nach Aussen wirkenden Kraft und des Verschleisses sich radial nach Aussen verschiebt, sodass die Dichtwirkung des Kolbenrings trotz des Verschleisses erhalten bleibt. Bekannte Kolbenringe weisen dagegen den Nachteil auf, dass die Dichtwirkung aufgrund unvollständiger Verschleisskompensation nachlässt.

Der erfindungsgemässe Kolbenring weist zudem den Vorteil auf, dass der Dichtring in Umfangsrichtung über weite Strecken ein Vollprofil mit konstanter Querschnittsfläche aufweisen kann, vorzugsweise mit einem quadratischem oder rechteckförmigem Querschnitt, wobei die axiale Breite und die radiale Breite des Dichtrings vorzugsweise der axialen Breite und der radialen Breite des Kolbenrings entspricht. In einer vorteilhaften Ausgestaltung erstreckt sich der Dichtring mit Vollprofil in Umfangsrichtung bis zum Stossschloss. Je nach gewählter Länge des Stossschlosses, welches sich in Umfangsrichtung je nach Ausführungsform über einen Winkelbereich von 20° bis maximal 180° erstreckt, ist der Dichtring mit Vollprofil vorzugsweise derart ausgestaltet, dass sich dieser abhängig von der Umfangslänge des Stossschlosses über den restlichen Winkelbereich von 340° bis 180° erstreckt. Im Gegensatz zu aus dem Stand der Technik bekannten Kolbenringen, die aus zumindest zwei in axialer Richtung nebeneinander liegend angeordneten, sich in Umfangsrichtung erstreckenden Teilringen bestehen, weist der erfindungsgemässe Kolbenring einen einzigen Dichtring auf, welcher ein Vollprofil aufweist, das sich über die gesamte axiale Breite und die gesamte radiale Breite des Kolbenrings erstreckt, was eine grosse Querschnittsfläche zur Folge hat, und was unter anderem zur Folge hat, dass der Dichtring relativ grossen Druckkräften standhalten kann. In Anbetracht, dass von Kolbenringen gefordert wird immer grösseren Drücken standzuhalten, ist der Dichtring mit Vollprofil über die gesamte Breite besonders vorteilhaft, da dieser in der Lage ist grossen Kräften zu widerstehen.

Das Stossschloss kann sich über einen Winkel im Bereich zwischen 20° und 180° erstrecken. In einer vorteilhaften Ausgestaltung erstreckt sich das Stossschloss um einen Winkelbereich von weniger als oder gleich 120 Grad. Aus dem eingangs zitierten Stand der Technik ist es bekannt, dass ein Kolbenring aus einem Dichtring und einem Deckring besteht, wobei sich sowohl der Dichtring als auch der Deckring über beinahe 360° erstrecken. Ein Deckring, der sich über einen Winkelbereich von mehr als 180 Grad erstreckt weist den Nachteil auf, dass ein solcher Deckring beim Aufbringen auf eine Kolbenstange aufgeweitet werden muss, was die Gefahr birgt, dass am Deckring während dessen Montage oder während dem nachfolgenden Betrieb ein Bruchversagen auftritt. Solche Deckringe sind zudem relativ steif ausgestaltet, was die Bruchgefahr während der Montage zusätzlich erhöht. Der erfindungsgemässe Kolbenring mit einem Stossschloss, das sich über einen Winkelbereich von weniger als oder bis zu 180 Grad erstreckt, weist den Vorteil auf, dass dieses während dem Anbringen an die Kolbenstange nicht aufgeweitet werden muss und dadurch eine mögliche Beschädigung während der Montage ausgeschlossen ist. Zudem weist dieses Stossschloss den Vorteil auf, dass sich aus einem Ring beziehungsweise einem Rohling, der sich über 360 Grad erstreckt, zwei Stossschlösser herstellen lassen. Ein Stossschloss, das sich bis maximal 120 Grad erstreckt, weist den Vorteil auf, dass sich aus einem Ring beziehungsweise einem Rohling, der sich über 360 Grad erstreckt, drei Stossschlösser herstellen lassen. Es ist somit weniger Material erforderlich, sodass ein Stossschloss und somit auch der gesamte Kolbenring kostengünstiger herstellbar sind. Dies ist insbesondere dann vorteilhaft, wenn für das Stossschloss teure Materialien wie PEEK verwendet werden.

Der erfindungsgemässe Kolbenring weist den Vorteil auf, dass dieser einen einteiligen Dichtungsring umfasst, sowie ein am Dichtungsring anliegendes Stossschloss, wobei das Stossschloss radial verschiebbar ist, und auf Grund der anliegenden Druckdifferenz an den Dichtungsring angepresst wird, sodass der erfindungsgemässe Kolbenring eine hohe Dichtleistung aufweist, einen geringen Verschleiss aufweist, und einfach zu montieren ist.

In einer vorteilhaften Ausgestaltung ist der Dichtring derart ausgestaltet, dass dieser auf einem dem Stoss gegenüberliegenden Abschnitt, welcher während dem Betrieb auf Grund der auftretenden Biegung eine hohe Belastung aufweist, ein Vollprofil aufweist, über die gesamte axiale Breite und die gesamte radiale Breite, bzw. eine ungeschwächte, radialen Breite beziehungsweise einen ungeschwächten Querschnitt aufweist. Der Dichtring mit vorzugsweise Vollprofil und mit konstanter axialer Breite und konstanter radialen Breite erstreckt sich vorteilhafterweise über einen Winkelbereich von 340° bis 180°. In den beiden daran anschliessenden Endschenkelteilen des Dichtrings nimmt die radiale Breite des Schenkelteils beziehungsweise die Querschnittfläche des Schenkelteils in Richtung zu den beiden Stossenden hin vorteilhafterweise ab, vorzugsweise kontinuierlich ab. Durch die Abnahme des Querschnitts wird im Bereich dieser anschliessenden Endschenkelteile die Biegesteifigkeit reduziert und so eine verbesserte Verschleisskompensation ermöglicht. Die reduzierte Biegesteifigkeit der Endschenkelteile weist zudem den Vorteil auf, dass der Dichtring während der Montage und dem dabei erforderlichen kurzfristigen Aufweiten des Dichtrings keinen Schaden nimmt.

Die Abdichtung des Stosses des Dichtungsrings erfolgt sowohl in radialer als auch in axialer Richtung durch ein vorzugsweise spezielles L-förmiges Segment, das als so genanntes Stossschloss ausgebildet ist.

Der Umfang dieses Stossschlosses in Umfangsrichtung beträgt maximal gleich oder weniger als 180 Grad, so dass die Verschleisskompensation durch ein radiales Verschieben des Stossschlosses und nicht durch ein Biegen des Stossschlosses erfolgt. Die Materialeigenschaften des Stossschlosses, insbesondere dessen Elastizität, sind daher für die Güte der Verschleisskompensation nicht von Bedeutung. Auch bei der Montage des Stossschlosses an den Kolben besteht keine Bruchgefahr, da es hierzu nicht aufgebogen, sondern lediglich in die Nut eingeschoben wird. In einer besonders bevorzugten Ausgestaltung besteht der Kolbenring aus einem relativ elastischen Dichtring, wobei der Dichtring zum Beispiel aus einem Polymer wie PTFE besteht, und einem relativ steifen Stossschloss, wobei das Stossschloss zum Beispiel aus Metall oder aus PEEK besteht. Eine solche Ausführungsform weist den Vorteil auf, dass der Dichtring auf Grund von dessen elastischen Eigenschaften während der Montage problemlos aufgeweitet werden kann, ohne dass eine Bruchbefahr besteht. Der erfindungsgemässe Kolbenring kann daher zuverlässig und sicher an einem Kolben montiert werden.

Der Kolbenring ist als trockenlaufendes oder geschmiertes Reibdichtelement insbesondere zur Abdichtung von oszillierend bewegten Kolben geeignet.

Der erfindungsgemässe Kolbenring wird nachfolgend an Hand von Ausführungsbeispielen im Detail beschrieben.

### Kurze Beschreibung der Zeichnungen

Die zur Erläuterung der Ausführungsbeispiele verwendeten Zeichnungen zeigen:
- Fig. 1a: eine Draufsicht auf einen Kolbenring;
- Fig. 1b: einen Schnitt durch Figur 1a entlang der Schnittlinie A-A;
- Fig. 2a: eine Draufsicht auf den Dichtring;
- Fig. 2b: einen Schnitt durch Figur 2a entlang der Schnittlinie B-B;
- Fig. 3a: eine Draufsicht auf das Stossschloss;
- Fig. 3b: einen Schnitt durch Figur 3a entlang der Schnittlinie C-C;
- Fig. 4: eine Draufsicht auf den Kolbenring sowie die am Kolbenring angreifenden Kräfte;
- Fig. 5a: eine Draufsicht auf ein weiteres Ausführungsbeispiel eines Kolbenrings;
- Fig. 5b: einen Schnitt durch Figur 5a entlang der Schnittlinie D-D;
- Fig. 6a: eine Draufsicht auf ein weiteres Ausführungsbeispiel eines Stossschlosses;
- Fig. 6b: einen Schnitt durch Figur 6a entlang der Schnittlinie E-E;
- Fig. 7: einen Schnitt durch ein weiteres Ausführungsbeispiel eines Kolbenrings;
- Fig. 8a: eine Draufsicht durch ein weiteres Ausführungsbeispiel eines Kolbenrings;
- Fig. 8b: einen Schnitt durch Figur 8a entlang der Schnittlinie F-F.

Grundsätzlich sind in den Zeichnungen gleiche Teile mit gleichen Bezugszeichen versehen.

### Wege zur Ausführung der Erfindung

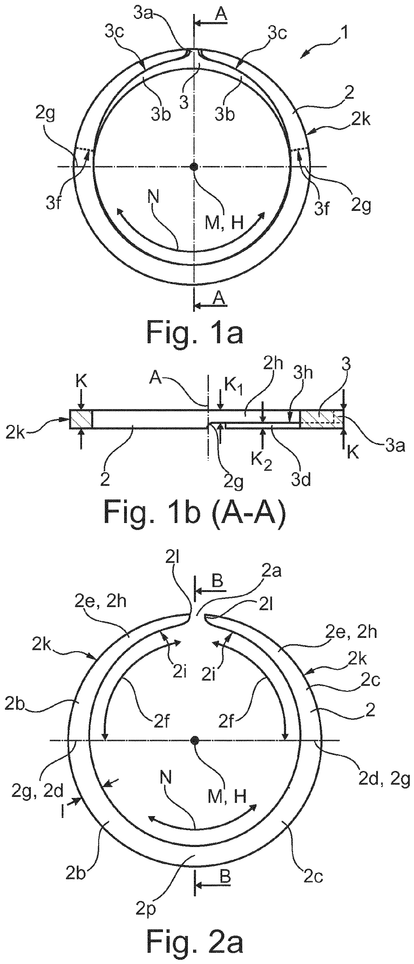

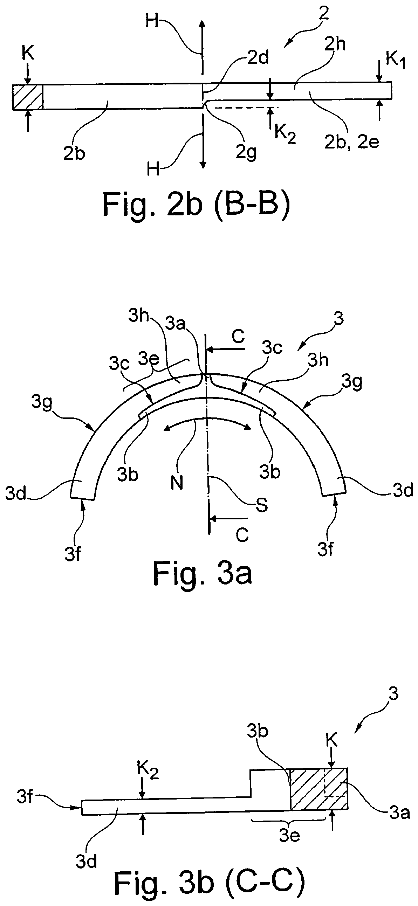

Figur 1a zeigt in einer Draufsicht und Figur 1b in einem Schnitt entlang der Schnittlinie A-A einen Kolbenring 1 für einen Kolbenkompressor. Der Kolbenring 1 umfasst einen Dichtring 2 sowie ein Stossschloss 3. Figur 2a zeigt eine Draufsicht auf den Dichtring 2 und Figur 2b einen Schnitt durch den Dichtring 2 entlang der Schnittlinie B-B. Figur 3a zeigt eine Draufsicht auf das Stossschloss 3 und Figur 3b einen Schnitt durch das Stossschloss 3 entlang der Schnittlinie C-C. Der Dichtring 2 ist einteilig ausgestaltet und erstreckt sich in Umfangsrichtung N um einen Mittelpunkt M mit senkrecht zur Umfangsrichtung N verlaufender Achsrichtung H. Der Dichtring 2 weist eine kreisbogenförmig verlaufende Aussenfläche 2k auf, wobei der Dichtring 2 einen geraden Stoss mit Stossenden 21 aufweist, und wobei sich zwischen den Stossenden 21 in Umfangsrichtung N ein Spalt 2a erstreckt. Das Stossschloss 3 dient zum Abdichten des Spaltes 2a, wobei das Stossschloss 3 symmetrisch bezüglich einer Symmetrieebene S ausgestaltet ist. Das Stossschloss 3 weist ausgehend von der Symmetrieebene S zwei sich beidseitig in Umfangsrichtung N erstreckende

Stossschlossschenkelteile 3d auf, wobei sich die beiden Stossschlossschenkelteile 3d insgesamt über eine gesamthaften Winkelbereich zwischen minimal 20° und maximal 180° erstrecken können, und vorzugsweise, wie in den Figuren 1a und 3a dargestellt, sich über einen Winkel von weniger als 180° erstrecken.

Die Stossschlossschenkelteile 3d weisen eine radial nach Aussen gerichtete, kreisbogenförmig verlaufende Schenkelteilaussenseite 3g auf, wobei das Stossschloss 3 ausgehend von der Symmetrieebene S ein sich beidseitig in Umfangsrichtung N erstreckendes, in Achsrichtung H über die Schenkelteile 3d vorstehendes Anlageteil 3b aufweist. Das Anlageteil 3b erstreckt sich in Umfangsrichtung N nur über einen Teilwinkel der beiden Stossschlossschenkelteile 3d, wobei das Anlageteil 3b eine radial nach Aussen gerichtete Anlagefläche 3c aufweist, und wobei die Anlagefläche 3c bezüglich der Schenkelteilaussenseite 3g in radialer Richtung zurückversetzt verläuft, sodass die Stossschlossschenkelteile 3d entlang der Anlagefläche 3c einen in Achsrichtung H ausgerichteten Anschlag 3h ausbilden. Der Dichtring 2 und das Stossschloss 3 sind derart gegenseitig angepasst ausgestaltet, dass in zusammengebautem Zustand, wie aus Figur 1a und Figur 1b ersichtlich, das Stossschloss 3 über den Anschlag 3h seitlich am Dichtring 2 anliegt, so dass die Anlagefläche 3c des Anlageteils 3b unter anderem entlang des Spaltes 2a verläuft und diesen in Umfangsrichtung N abdeckt.

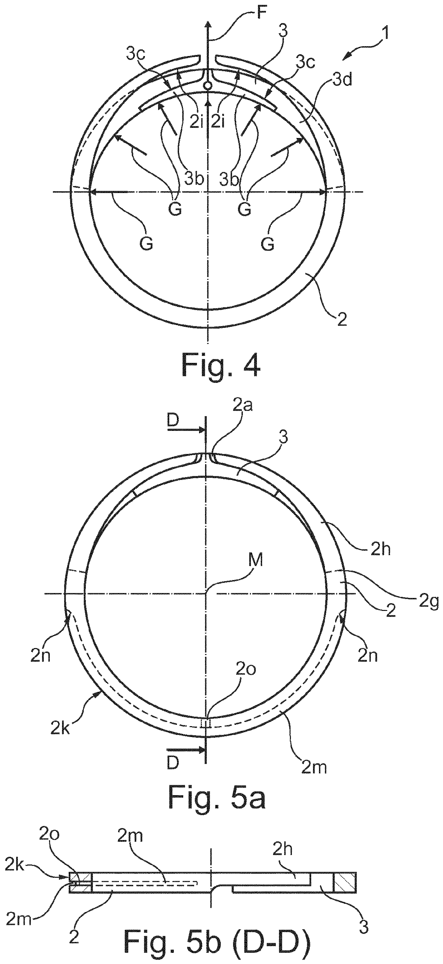

Vorteilhafterweise sind der Dichtring 2 und das Stossschloss 3 derart gegenseitig gegenseitig angepasst ausgestaltet, dass, wenn das Stossschloss 3 an der Innenseite 2i des Dichtrings 2 anliegt, die Schenkelteilaussenseite 3g des Stossschlosses 3 und die Aussenfläche 2k des Dichtrings 2 in radialer Richtung zumindest über einen Teilabschnitt der Umfangsrichtung N deckungsgleich verlaufen. Dabei wirkt auf das Stossschloss 3, wie in Figur 4 dargestellt, während dem Betrieb des Kolbenkompressors ein radial nach aussen gerichteter Gasdruck G, was zur Folge hat, dass das Schossschloss 3 radial nach aussen gedrückt wird und somit die in Figurla dargestellte Stellung einnimmt. Während dem Betrieb des Kolbenkompressors erfährt der Kolbenring 1 einen Verschleiss, das heisst während dem Betrieb erfährt die radial nach Aussen gerichtete Seite 3g des Stossschlosses 3 als auch zumindest ein Teil der Aussenumfangsfläche 2k des Dichtrings 2 einen Verschleiss. Die Aussenumfangsfläche 2k erfährt insbesondere im Bereich der sich verjüngenden Schenkelteile 2e einen Verschleiss. Dies hat zur Folge, dass sich die Breite des Spaltes 2a in Umfangsrichtung N auf Grund des Verschleisses während dem Betrieb des Kolbenkompressors vergrössert. Der auf das Stossschloss 3 wirkende Gasdruck G, welcher eine radial nach aussen wirkende Kraft auf das Stossschloss 3 ausübt, hat zur Folge, dass das Stossschloss 3 auch mit zunehmendem Verschleiss von Dichtring 2 und Stossschloss 3 in definierter Lage am Spalt 2a anliegt und diese abdichtet. Deshalb weist der erfindungsgemässe Kolbenring 1 eine zuverlässige Verschleisskompensation sowie eine langfristig zuverlässige Dichtwirkung auf.

Vorteilhafterweise ist der Dichtring 2, wie in Figur 1a und Figur 2a dargestellt, derart ausgestaltet, dass der Dichtring 2 aus einem ersten und ein zweiten Schenkelteil 2b,2c besteht, wobei sich die beiden Schenkelteile 2b,2c in Umfangsrichtung N zu den Stossenden 21 hin entlang des sich verjüngenden Schenkelteils 2e in radialer Richtung verjüngen. Vorteilhafterweise verjüngen sich die beiden Schenkelteile 2b,2c bzw. die Schenkelteile 2e entlang eines Winkelbereich, der bis zu den Stossenden 21 verläuft, wobei dieser Winkelbereich, ausgehend von den Stossenden 21, beispielsweise 45° und maximal 90° beträgt.
In einer vorteilhaften Ausgestaltung weist das Stossschloss 3, wie in Figur 1a und Figur 3a dargestellt, in der Mitte, im Bereich der Symmetrieebene S, eine vorstehende Nocke 3a aufweist, welche in radialer Richtung über die Anlagefläche 3c vorsteht, wobei die Nocke 3a in Umfangsrichtung N so breit wie der Spalt 2a oder schmaler als der Spalt 2a ausgestaltet ist. Vorteilhafterweise erstreckt sich die vorstehende Nocke 3a bis zur Schenkelteilaussenseite 3g. In einer vorteilhaften Ausgestaltung erstreckt sich das Stossschloss 3 in Umfangsrichtung N über einen Winkelbereich von maximal 180°.

Vorteilhafterweise ist der Dichtring 2 wie in den Figuren 1b und 2b dargestellt derart ausgestaltet, dass der Dichtring 2 aus einem ersten und ein zweiten Schenkelteil 2b,2c besteht, wobei jeder Schenkelteil 2b,2c einen Absatz 2g aufweist, wobei sich die axiale Breite K des Schenkelteils 2b,2c im Bereich des Absatzes 2g reduziert, sodass jeder Schenkelteil 2b,2c zwischen dem Absatz 2g und dem Stossende 21 ein Endschenkelteil 2h mit reduzierter axialer Breite K1 aufweist.

Wie in den Figuren 1a und 2a dargestellt weist der Dichtring 2 in Umfangsrichtung N zwischen den beiden Absätzen 2g eine konstante axiale Breite K und eine konstante radiale Breite I auf, sodass der Dichtring 2 entlang dieses Abschnittes wie in Figur 2b dargestellt ein Vollprofil aufweist, das rechteckig oder quadratisch ausgestaltet ist. Die Endschenkelteile 2h weisen eine reduzierte axiale Breite K1 auf, wobei auch die Stossschlossschenkelteile 3d eine axiale Teilbreite K2 aufweisen, wobei die Endschenkelteile 2h und die Stossschlossschenkelteile 3d derart gegenseitig angepasst angeordnet und ausgestaltet sind, dass deren axiale Gesamtbreite der axialen Breite K des Dichtrings 2 zwischen den beiden Absätzen 2g entspricht. Dadurch ist sichergestellt, dass der Klobenring 1 entlang dessen gesamten Umfang eine konstante axiale Breite K aufweist.

Wie in Figur 1b dargestellt liegt das Stossschlossschenkelteil 3d vorzugsweise über den Anschlag 3h am Endschenkelteil 2h an, wobei die reduzierte axiale Breite K1 des Endschenkelteils 2h und die axiale Teilbreite K2 des Schossschlossschenkelteils 3d eine axiale Gesamtbreite ergeben, welche der axialen Breite K entspricht.

In einer vorteilhaften Ausgestaltung beginnt sowohl das Endschenkelteil 2h als auch das sich verjüngende Schenkelteil 2e bei derselben Übergangsstelle, beim Absatz 2g, das heisst, dass der Dichtring 2 in Umfangsrichtung sich beginnend beim Absatz 2g entlang des Schenkelteils 2e in radialer Richtung verjüngt und in axialer Richtung die reduzierte Breite K1 aufweist. Diese Übergangsstelle muss jedoch für das Endschenkelteil 2h und das sich verjüngende Schenkelteil 2e nicht identisch sein, so könnte sich das erste und zweite Schenkelteil 2b,2c in Umfangsrichtung N beispielsweise auch erst etliche Winkelgrade nach dem Absatz 2g in radialer Richtung verjüngen, und dabei das sich verjüngende Schenkelteil 2f ausbilden.

Wie aus Figur 1a ersichtlich weist das Stossschloss 3 in einer vorteilhaften Ausgestaltung zwei Anlageteile 3b auf, die in Richtung zum Ende der Anlageteile 3b hin eine abnehmende radiale Wandstärke aufweisen. Zudem ist der Dichtring 2 derart verlaufend ausgestaltet, dass dieser ausgehend vom Stoss 21 in Umfangsrichtung eine radial zunehmende Wandstärkte aufweist, wobei die Wandstärke von Stossschloss 3 und Dichtring 2, wie in Figur 1a dargestellt, in radialer Richtung vorteilhafterweise derart gegenseitig angepasst verlaufen, dass die Summe der radialer Breite von Stossschloss 3 und Dichtring 2 konstant ist, sodass der Kolbenring 1 in Umfangsrichtung vorteilhafterweise eine konstante radiale Breite I aufweist.

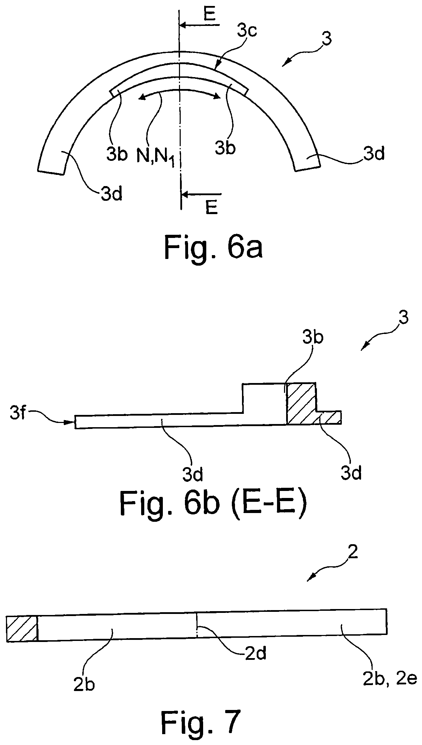

Die Figuren 6a und 6b zeigen ein weiteres Ausführungsbeispiel eines Stossschlosses 3, das im Unterschied zu dem in Figur 3a dargestellten Ausführungsbeispiel keine Nase 3a aufweist.

In einer vorteilhaften Ausführungsform weist jeder Schenkelteil 2b,2c wie in Figur 2b dargestellt einen Absatz 2g auf, wobei sich die Dicke bzw. die axiale Breite K des Schenkelteils 2b,2c in Achsrichtung H im Bereich des Absatzes 2g reduziert, sodass der Schenkelteil 2b,2c zwischen dem Absatz 2g und dem Stossende 21 eine reduzierte Dicke bzw. eine reduzierte axiale Breite K1 aufweist

In einer vorteilhaften Ausgestaltung sind der Dichtring 2 und das Stossschloss 3 wie in Figur 1a dargestellt derart gegenseitig angepasst ausgestaltet, dass die beiden Schenkelteile 3d des Abschlussteils 3 je an einer Stirnseite 3f enden, und dass die Stirnseiten 3f sowie die Absätze 2g derart gegenseitig angepasst angeordnet sind, dass die Stirnseiten 3f am jeweiligen Absatz 2g anliegen, wenn das Stossschloss 3 in den Dichtring 2 eingefügt ist. Dies hat zur Folge, dass das Stossschloss 3 bezüglich dem Dichtring 2 eine definierte Lage einnimmt. Dies ist besonders vorteilhaft, wenn ein Stossschloss 3 verwendet wird, das, wie in Figur 6a und 6b dargestellt, keine vorstehende Nocke 3a beziehungsweise Nase 3a aufweist.

In einer weiteren vorteilhaften Ausgestaltung weist der Dichtring 2 wie in den Figuren 5a und 5b dargestellt an der Aussenumfangsfläche 2k eine sich in Umfangsrichtung N erstreckende Druckentlastungsnut 2m auf, wobei zudem eine Bohrung 2o vorgesehen ist, welche eine Fluid leitende Verbindung zwischen der Druckentlastungsnut 2m und der Innenseite des Dichtrings 2 ausbildet. Vorteilhafterweise erstreckt sich die Druckentlastungsnut 2m bezüglich dem Mittelpunkt M gegenüberliegend und symmetrisch zum Spalt 2a. Diese Ausführungsform ist insbesondere für den Einsatz in hoch belasteten Dichtsystemen geeignet.

Wie in den Figuren 5a und 5b dargestellt ist die Druckentlastungsnut 2m vorteilhafterweise derart breit ausgestaltet, dass die Gesamtbreite der Aussenumfangsfläche 2k entlang der Druckentlastungsnut 2m im Wesentlichen der Aussenumfangsfläche 2k entlang der reduzierten axialen Breite K1 des Endschenkelteils 2h entspricht. Dies hat zur Folge, dass die Aussenumfangsflächen 2k entlang der Druckentlastungsnut 2m und entlang des Endschenkelteils 2h dieselbe axiale Breite aufweisen. Dies hat zur Folge, dass der Flächendruck, mit welchem der Dichtring 2 an der Kolbenwand anliegt, in Umfangsrichtung gleich oder sehr ähnlich ist, sodass der Dichtring 2 an keiner Stelle übermässig belastet ist, sodass sich ein gleichmässiger Verschleiss ergibt. Wie in Figur 5a dargestellt ist der Beginn bzw. das Ende 2n der Druckentlastungsnut 2m bezüglich einer horizontalen Linie durch den Mittelpunkt M symmetrisch zum Absatz 2g angeordnet. Diese Ausgestaltung hat ebenfalls zur Folge, dass an der Aussenumfangsfläche 2k vermehrt symmetrische Kräfte wirken.

In einer weiteren möglichen Ausgestaltung könnte der Dichtring 2, wie in Figur 7 mit einem ersten Schenkelteil 2b dargestellt, entlang der gesamten Umfangsrichtung N dieselbe axiale Gesamtbreite K aufweisen. Der Schenkelteil 2b könnte über die gesamte Umfangsrichtung N dieselbe radiale Breite I aufweisen, oder wie in Figur 7 dargestellt, ab der Übergangsstelle 2d eine sich bezüglich radialer Breite verjüngendes Schenkelteil 2e aufweisen.

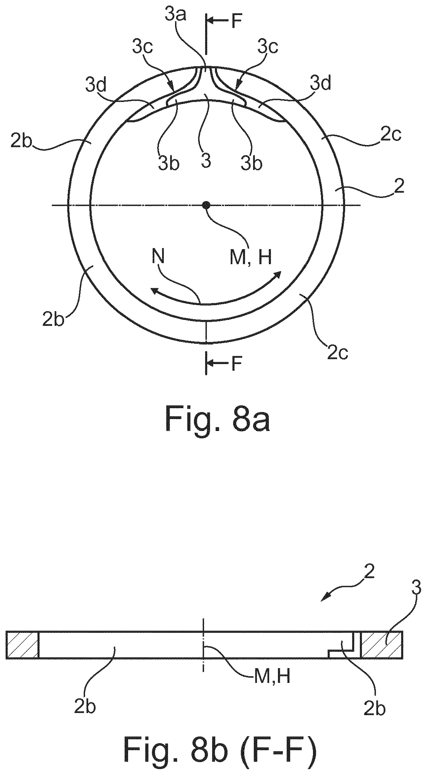

In einer weiteren möglichen Ausgestaltung kann der Kolbenring 1 wie in den Figuren 8a und 8b dargestellt derart ausgestaltet sein, dass der Dichtring 2 beziehungsweise dessen beiden Schenkelteile 2b,2c entlang der gesamten Umfangsrichtung N in radialer Richtung eine konstante radiale Breite I aufweisen, sie sich erst ganz am Schluss im Bereich des Stosses 21 reduziert. In diesem Ausführungsbeispiel ist die radiale Breite des Stossschlosses 3 leicht breiter ausgestaltet als die radiale Breite I des Dichtrings 2, damit das Stossschloss 3 den Dichtring 2, wie oben in Figur 8a dargestellt, aufnehmen kann.

In einer vorteilhaften Ausgestaltung ist der Kolbenring 1 beziehungsweise der Dichtring 2 und das Stossschloss 3 aus demselben Material gefertigt sind. Es kann sich jedoch auch als vorteilhaft erweisen den Dichtring 2 und das Stossschloss 3 aus unterschiedlichem Material zu fertigen. Als Materialien sind beispielsweise PTFE, PEEK und/oder modifiziertes PEEK geeignet. In einer vorteilhaften Ausgestaltung ist der Dichtring aus einem Polymer wie PTFE gefertigt, wogegen das Stossschloss aus PEEK gefertigt ist. Der erfindungsgemässe Kolbenring kann sowohl bei trocken laufenden wie auch bei geschmierten Kompressoren verwendet werden. Als Materialen für Trockenlauf ist beispielsweise gefülltes PTFE, Hochtemperaturpolymere wie PEEK, Polyimid, Polyamidimid, Epoxid oder PFA geeignet. Als Material bei geschmierten Verdichtern sind beispielsweise gefüllte Kunststoffe und Faserverbundmaterialien, oder beispielsweise Metalle wie Grauguss oder Bronze geeignet. Für geschmierte Verdichter wäre auch eine Hybridlösung des Kolbenrings denkbar, indem der Dichtring 2 aus einem Kunststoff wie beispielsweise PEEK oder PTFE besteht, und das Stossschloss 3 aus einem Metall wie beispielsweise Bronze besteht. Mit einer solchen Hybridlösung ist eine sehr gute Dichtwirkung erzielbar. In einer weiteren, vorteilhaften Ausgestaltung ist der Kolbenring 1 derart ausgestaltet, dass der Dichtring 2 und das Stossschloss 3 aus unterschiedlichem Material gefertigt sind, wobei das Material des Dichtrings 2 vorzugsweise ein um zumindest 10% tieferes Biegeelastizitätsmodul aufweist als das Stossschloss 3.

Der erfindungsgemässe Kolbenring 1 kann bei einem horizontalen Kompressor derart angeordnet sein, dass sich das Stossschloss 3 im drucklosen Zustand aufgrund der Gewichtskraft nicht in Kontakt mit der Zylinderlaufbahn befindet. Eine Aktivierung des Stossschlosses erfolgt durch eine am Kolbenring 1 anliegende Druckdifferenz, welche das Stossschloss entgegen der Gewichtskraft radial nach aussen gegen die Zylinderlaufbahn verschiebt und so den Stoss des Dichtrings 2 abdichtet.

## Patentansprüche

1. Kolbenring (1) für einen Kolbenkompressor, umfassend einen einteiligen, sich um einen Mittelpunkt (M) mit Achsrichtung (H) in einer Umfangsrichtung (N) erstreckenden Dichtring (2) mit einer kreisbogenförmig verlaufenden Aussenfläche (2k), wobei der Dichtring (2) einen geraden Stoss mit Stossenden (21) sowie einen zwischen den Stossenden (21) in Umfangsrichtung (N) verlaufenden Spalt (2a) aufweist, sowie umfassend ein Stossschloss (3) zum Abdichten des Spaltes (2a), wobei das Stossschloss (3) symmetrisch bezüglich einer Symmetrieebene (S) ausgestaltet ist, wobei das Stossschloss (3) ausgehend von der Symmetrieebene (S) zwei sich beidseitig in Umfangsrichtung (N) erstreckende Stossschlossschenkelteile (3d) aufweist, wobei sich die beiden Stossschlossschenkelteile (3d) insgesamt über einen Winkelbereich zwischen 20° und maximal 180° erstrecken, und wobei die Stossschlossschenkelteile (3d) eine radial nach Aussen gerichtete, kreisbogenförmig verlaufende Schenkelteilaussenseite (3g) aufweisen, und wobei das Stossschloss (3) ausgehend von der Symmetrieebene (S) ein sich beidseitig in Umfangsrichtung (N) erstreckendes, in Achsrichtung (H) über die Stossschlossschenkelteile (3d) vorstehendes Anlageteil (3b) aufweist, wobei sich das Anlageteil (3b) in Umfangsrichtung (N) nur über einen Teilwinkel der beiden Stossschlossschenkelteile (3d) erstreckt, und wobei das Anlageteil (3b) eine radial nach Aussen gerichtete Anlagefläche (3c) aufweist, und wobei die Anlagefläche (3c) bezüglich der Schenkelteilaussenseite (3g) in radialer Richtung zurückversetzt verläuft, sodass die Stossschlossschenkelteile (3d) entlang der Anlagefläche (3c) einen in Achsrichtung (H) ausgerichteten Anschlag (3h) ausbilden, wobei der Dichtring (2) und das Stossschloss (3) derart gegenseitig angepasst ausgestaltet sind, dass in zusammengebautem Zustand das Stossschloss (3) über den Anschlag (3h) seitlich am Dichtring (2) anliegt, und dass die Anlagefläche (3c) des Anlageteils (3b) entlang des Spaltes (2a) verläuft und diesen in Umfangsrichtung (N) abdeckt.

2. Kolbenring nach Anspruch 1, **dadurch gekennzeichnet, dass** der Dichtring (2) aus einem ersten und ein zweiten Schenkelteil (2b,2c) besteht, dass jeder Schenkelteil (2b,2c) einen Absatz (2g) aufweist, wobei sich die axiale Breite (K) des Schenkelteils (2b,2c) im Bereich des Absatzes (2g) reduziert, sodass jeder Schenkelteil (2b,2c) zwischen dem Absatz (2g) und dem Stossende (21) ein Endschenkelteil (2h) mit reduzierter axialer Breite (K1) aufweist.

3. Kolbenring nach Anspruch 2, **dadurch gekennzeichnet, dass** der Dichtring (2) in Umfangsrichtung (N) zwischen den beiden Absätzen (2g) eine konstante axiale Breite (K) und eine konstante radiale Breite (I) aufweist, dass die Endschenkelteile (2h) eine reduzierte axiale Breite (K1) aufweisen, dass die Stossschlossschenkelteile (3d) eine axiale Teilbreite (K2) aufweisen, und dass die Endschenkelteile (2h) und die Stossschlossschenkelteile (3d) derart gegenseitig angepasst angeordnet und ausgestaltet sind, dass deren axiale Gesamtbreite der axialen Breite (K) des Dichtrings (2) zwischen den beiden Absätzen (2g) entspricht.

4. Kolbenring nach Anspruch 3, **dadurch gekennzeichnet, dass** das Stossschlossschenkelteil (3d) über den Anschlag (3h) am Endschenkelteil (2h) anliegt, und dass die reduzierte axiale Breite (K1) des Endschenkelteils (2h) und die axiale Teilbreite (K2) des Schossschlossschenkelteils (3d) eine axiale Gesamtbreite ergeben, welche der axialen Breite (K) entspricht.

5. Kolbenring nach einem der vorhergehenden Ansprüche, **dadurch gekennzeichnet, dass** der Dichtring (2) und das Stossschloss (3) derart gegenseitig angepasst ausgestaltet sind, dass, wenn das Stossschloss (3) an der Innenseite (2i) des Dichtrings (2) anliegt, die Schenkelteilaussenseite (3g) des Stossschlosses (3) und die Aussenfläche (2k) des Dichtrings (2) in radialer Richtung zumindest über einen Teilabschnitt der Umfangsrichtung (N) deckungsgleich verlaufen.

6. Kolbenring nach einem der vorhergehenden Ansprüche, **dadurch gekennzeichnet, dass** das Stossschloss (3) in der Mitte, im Bereich der Symmetrieebene (S), eine vorstehende Nocke (3a) aufweist, welche in radialer Richtung über die Anlagefläche (3c) vorsteht, wobei die Nocke (3a) in Umfangsrichtung (N) so breit wie der Spalt (2a) oder schmaler als der Spalt (2a) ausgestaltet ist.

7. Kolbenring nach Anspruch 6, **dadurch gekennzeichnet, dass** die vorstehende Nocke (3a) sich bis zur Schenkelteilaussenseite (3g) erstreckt.

8. Kolbenring nach einem der vorhergehenden Ansprüche, **dadurch gekennzeichnet, dass** sich das Stossschloss (3) in Umfangsrichtung (N) über einen Winkelbereich von maximal 120° erstreckt.

9. Kolbenring nach einem der vorhergehenden Ansprüche, **dadurch gekennzeichnet, dass** der Dichtring (2) aus einem ersten und ein zweiten Schenkelteil (2b,2c) besteht, wobei sich die beiden Schenkelteile (2b,2c) in Umfangsrichtung (N) zu den Stossenden (21) hin in radialer Richtung verjüngen.

10. Kolbenring nach einem der Ansprüche 1 bis 8, **dadurch gekennzeichnet, dass** die beiden Schenkelteile (2b,2c) entlang der gesamten Umfangsrichtung (N) eine konstante radiale Breite (I) aufweisen.

11. Kolbenring nach einem der Ansprüche 2 bis 10, **dadurch gekennzeichnet, dass** die beiden Stossschlossschenkelteile (3d) des Abschlussteils (3) je an einer Stirnseite (3f) enden, und dass die Stirnseiten (3f) sowie die Absätze (2g) derart gegenseitig angepasst angeordnet sind, dass die Stirnseiten (3f) am jeweiligen Absatz (2g) anliegen, wenn das Stossschloss (3) in den Dichtring (2) eingefügt ist.

12. Kolbenring nach einem der vorhergehenden Ansprüche, **dadurch gekennzeichnet, dass** der Dichtring (2) an der Aussenumfangsfläche (2k) eine sich in Umfangsrichtung erstreckende Druckentlastungsnut (2m) aufweist.

13. Kolbenring nach einem der Ansprüche 1 bis 12, **dadurch gekennzeichnet, dass** der Dichtring (2) und das Stossschloss (3) aus unterschiedlichem Material gefertigt sind, wobei das Material des Dichtrings (2) ein zumindest 10% tieferes Biegeelastizitätsmodul aufweist als das Stossschloss (3).

14. Kolbenring nach Anspruch 13, **dadurch gekennzeichnet dass** der Dichtring (2) aus einem Metall besteht, und dass das Stossschloss (3) aus einem Kunststoff besteht.

15. Kolbenring nach Anspruch 13, **dadurch gekennzeichnet, dass** der Dichtring (2) aus einem Polymer besteht, und dass das Stossschloss (3) aus PEEK besteht.

## Claims

1. A piston ring (1) for a reciprocating compressor, comprising a one-piece sealing ring (2), extending in a circumferential direction (N) around a middle point (M) with an axial direction (H), with an outer face (2k) extending in an arcuate manner, wherein the sealing ring (2) has a straight cut joint with joint ends (21) and also a gap (2a) extending in the circumferential direction (N) between the joint ends (21), and also comprising a joint lock (3) for sealing the gap (2a), wherein the joint lock (3) is designed symmetrically with regard to a symmetry plane (S), wherein the joint lock (3), starting from the symmetry plane (S), has two leg sections (3d) extending on both sides in the circumferential direction (N), wherein the two joint-lock leg sections (3d) altogether extend over an angular range of between 20° and a maximum of 180°, and wherein the joint-lock leg sections (3d) have a radially outwardly oriented outer side (3g) extending in an arcuate manner, and wherein the joint lock (3), starting from the symmetry plane (S), has a contact section (3b) extending on both sides in the circumferential direction (N) and projecting in the axial direction (H) over the joint-lock leg sections (3d), wherein the contact section (3b) extends in the circumferential direction (N) only over a partial angle of the two joint-lock leg sections (3d), and wherein the contact section (3b) has a radially outwardly oriented contact face (3c), and wherein the contact face (3c) extends in a set back manner in the radial direction with regard to the leg-section outer side (3g) so that the joint-lock leg sections (3d) along the contact face (3c) form a stop (3h) which is oriented in the axial direction (H), wherein the sealing ring (2) and the joint lock (3) are of a mutually matched design in such a way that in the assembled state the joint lock (3) butts laterally against the sealing ring (2) via the stop (3h), and in such a way that the contact face (3c) of the contact section (3b) extends along the gap (2a) and covers this in the circumferential direction (N).

2. The piston ring as claimed in claim 1, **characterized in that** the sealing ring (2) consists of a first and a second leg section (2b, 2c), **in that** each leg section (2b, 2c) has a shoulder (2g), wherein the axial width (K) of the leg section (2b, 2c) is reduced in the region of the shoulder (2g) so that each leg section (2b, 2c) has an end leg section (2h) with reduced axial width (K1) between the shoulder (2g) and the joint end (21).

3. The piston ring as claimed in claim 2, **characterized in that** the sealing ring (2) has a constant axial width (K) and a constant radial width (I) in the circumferential direction (N) between the two shoulders (2g), **in that** the end leg sections (2h) have a reduced axial width (K1), **in that** the joint-lock leg sections (3d) have an axial partial width (K2), and **in that** the end leg sections (2h) and the joint-lock leg sections (3d) are arranged and designed in a mutually matched manner in such a way that their axial overall width corresponds to the axial width (K) of the sealing ring (2) between the two shoulders (2g).

4. The piston ring as claimed in claim 3, **characterized in that** the joint-lock leg section (3d) butts against the end leg section (2h) via the stop (3h), and **in that** the reduced axial width (K1) of the end leg section (2h) and the axial partial width (K2) of the joint-lock leg section (3d) create an axial overall width which corresponds to the axial width (K).

5. The piston ring as claimed in one of the preceding claims, **characterized in that** the sealing ring (2) and the joint lock (3) are of a mutually matched design in such a way that if the joint lock (3) butts against the inner side (2i) of the sealing ring (2), the leg-section outer side (3g) of the joint lock (3) and the outer face (2k) of the sealing ring (2) extend congruently in the radial direction at least over a partial section of the circumferential direction (N).

6. The piston ring as claimed in one of the preceding claims, **characterized in that** the joint lock (3), in the middle, in the region of the symmetry plane (S), has a projecting lobe (3a) which projects in the radial direction beyond the contact face (3c), wherein the lobe (3a) in the circumferential direction (N) is designed to be as wide as the gap (2a) or narrower than the gap (2a).

7. The piston ring as claimed in claim 6, **characterized in that** the projecting lobe (3a) extends up to the leg-section outer side (3g).

8. The piston ring as claimed in one of the preceding claims, **characterized in that** the joint lock (3) extends in the circumferential direction (N) over an angular range of at most 120°.

9. The piston ring as claimed in one of the preceding claims, **characterized in that** the sealing ring (2) consists of a first and a second leg section (2b, 2c), wherein the two leg sections (2b, 2c) in the circumferential direction (N) taper towards the joint ends (21) in the radial direction.

10. The piston ring as claimed in one of claims 1 to 8, **characterized in that** the two leg sections (2b, 2c) have a constant radial width (I) along the entire circumferential direction (N).

11. The piston ring as claimed in one of claims 2 to 10, **characterized in that** the two leg sections (3d) of the joint lock (3) terminate in each case on an end face (3f), and **in that** the end faces (3f) and also the shoulders (2g) are in a mutually matched arrangement in such a way that the end faces (3f) butt against the respective shoulder (2g) if the joint lock (3) is inserted into the sealing ring (2).

12. The piston ring as claimed in one of the preceding claims, **characterized in that** the sealing ring (2) on the outer circumferential face (2k) has a pressure relief groove (2m) extending in the circumferential direction.

13. The piston ring as claimed in one of claims 1 to 12, **characterized in that** the sealing ring (2) and the joint lock (3) are produced from different materials, wherein the material of the sealing ring (2) has a flexural elasticity modulus which is at least 10% lower than the joint lock (3).

14. The piston ring as claimed in claim 13, **characterized in that** the sealing ring (2) consists of metal, and **in that** the joint lock (3) consists of plastic.

15. The piston ring as claimed in claim 13, **characterized in that** the sealing ring (2) consists of a polymer, and **in that** the joint lock (3) consists of PEEK.

## Revendications

1. Segment de piston (1) pour un compresseur à piston, comprenant une bague d'étanchéité (2) d'une seule pièce s'étendant dans une direction périphérique (N) autour d'un centre (M) avec une direction axiale (H), avec une surface extérieure (2k) s'étendant sous forme d'arc de cercle, la bague d'étanchéité (2) présentant un aboutement droit avec des extrémités d'aboutement (21) ainsi qu'une fente (2a) s'étendant entre les extrémités d'aboutement (21) dans la direction périphérique (N), et comprenant une fermeture d'aboutement (3) pour fermer hermétiquement la fente (2a), la fermeture d'aboutement (3) étant configurée symétriquement par rapport à un plan de symétrie (S), la fermeture d'aboutement (3) présentant, à partir du plan de symétrie (S), deux parties de branche de fermeture d'aboutement (3d) s'étendant des deux côtés dans la direction périphérique (N), les deux parties de branche de fermeture d'aboutement (3d) s'étendant dans l'ensemble sur une plage angulaire comprise entre 20° et au maximum 180°, et les parties de branche de fermeture d'aboutement (3d) présentant un côté extérieur de partie de branche (3g) s'étendant en forme d'arc de cercle, orienté radialement vers l'extérieur, et la fermeture d'aboutement (3) présentant, à partir du plan de symétrie (S), une partie d'appui (3b) s'étendant des deux côtés dans la direction périphérique (N), faisant saillie dans la direction axiale (H) au-delà des parties de branche de fermeture d'aboutement (3d), la partie d'appui (3b) s'étendant dans la direction périphérique (N) seulement sur un angle partiel des deux parties de branche de fermeture d'aboutement (3d), et la partie d'appui (3b) présentant une surface d'appui (3c) orientée radialement vers l'extérieur, et la surface d'appui (3c) s'étendant en retrait par rapport au côté extérieur de la partie de branche (3g) dans la direction radiale, de telle sorte que les parties de branche de fermeture d'aboutement (3d) constituent, le long de la surface d'appui (3c), une butée (3h) orientée dans la direction axiale (H), la bague d'étanchéité (2) et la fermeture d'aboutement (3) étant configurées de manière adaptée mutuellement de telle sorte que dans l'état assemblé, la fermeture d'aboutement (3) s'applique par le biais de la butée (3h) latéralement contre la bague d'étanchéité (2), et que la surface d'appui (3c) de la partie d'appui (3b) s'étende le long de la fente (2a) et recouvre celle-ci dans la direction périphérique (N).

2. Segment de piston selon la revendication 1, **caractérisé en ce que** la bague d'étanchéité (2) se compose d'une première et d'une deuxième partie de branche (2b, 2c), **en ce que** chaque partie de branche (2b, 2c) présente un épaulement (2g), la largeur axiale (K) de la partie de branche (2b, 2c) diminuant dans la région de l'épaulement (2g), de telle sorte que chaque partie de branche (2b, 2c) présente entre l'épaulement (2g) et l'extrémité d'aboutement (21) une partie de branche terminale (2h) de largeur axiale réduite (K1).

3. Segment de piston selon la revendication 2, **caractérisé en ce que** la bague d'étanchéité (2) présente, dans la direction périphérique (N) entre les deux épaulements (2g), une largeur axiale constante (K) et une largeur radiale constante (I), **en ce que** les parties de branche terminales (2h) présentent une largeur axiale réduite (K1), **en ce que** les parties de branche de fermeture d'aboutement (3d) présentent une largeur partielle axiale (K2), et **en ce que** les parties de branche terminales (2h) et les parties de branche de fermeture d'aboutement (3d) sont disposées et configurées de manière adaptée mutuellement de telle sorte que leur largeur axiale totale corresponde à la largeur axiale (K) de la bague d'étanchéité (2) entre les deux épaulements (2g).

4. Segment de piston selon la revendication 3, **caractérisé en ce que** la partie de branche de fermeture d'aboutement (3d) s'applique par le biais de la butée (3h) contre la partie de branche terminale (2h), et **en ce que** la largeur axiale réduite (K1) de la partie de branche terminale (2h) et la largeur partielle axiale (K2) de la partie de branche de fermeture d'aboutement (3d) produisent une largeur totale axiale, qui correspond à la largeur axiale (K).

5. Segment de piston selon l'une quelconque des revendications précédentes, **caractérisé en ce que** la bague d'étanchéité (2) et la fermeture d'aboutement (3) sont configurées de manière adaptée mutuellement de telle sorte que lorsque la fermeture d'aboutement (3) s'applique contre le côté intérieur (2i) de la bague d'étanchéité (2), le côté extérieur de la partie de branche (3g) de la fermeture d'aboutement (3) et la surface extérieure (2k) de la bague d'étanchéité (2) s'étendent en affleurement dans la direction radiale au moins sur une portion partielle de la direction périphérique (N).

6. Segment de piston selon l'une quelconque des revendications précédentes, **caractérisé en ce que** la fermeture d'aboutement (3) présente au centre, dans la région du plan de symétrie (S), une came saillante (3a) qui fait saillie dans la direction radiale au-delà de la surface d'appui (3c), la came (3a) étant configurée dans la direction périphérique (N) avec la même largeur que la fente (2a) ou de manière plus étroite que la fente (2a).

7. Segment de piston selon la revendication 6, **caractérisé en ce que** la came saillante (3a) s'étend jusqu'au côté extérieur de la partie de branche (3g).

8. Segment de piston selon l'une quelconque des revendications précédentes, **caractérisé en ce que** la fermeture d'aboutement (3) s'étend dans la direction périphérique (N) sur une plage angulaire de 120° maximum.

9. Segment de piston selon l'une quelconque des revendications précédentes, **caractérisé en ce que** la bague d'étanchéité (2) se compose d'une première et d'une deuxième partie de branche (2b, 2c), les deux parties de branche (2b, 2c) se rétrécissant dans la direction périphérique (N) vers les extrémités d'aboutement (21).

10. Segment de piston selon l'une quelconque des revendications 1 à 8, **caractérisé en ce que** les deux parties de branche (2b, 2c) présentent une largeur radiale constante (I) le long de toute la direction périphérique (N).

11. Segment de piston selon l'une quelconque des revendications 2 à 10, **caractérisé en ce que** les deux parties de branche de fermeture d'aboutement (3d) de la partie de fermeture (3) se terminent à chaque fois au niveau d'un côté frontal (3f) et **en ce que** les côtés frontaux (3f) ainsi que les épaulements (2g) sont disposés de manière adaptée mutuellement de telle sorte que les côtés frontaux (3f) s'appliquent au niveau de l'épaulement respectif (2g) quand la fermeture d'aboutement (3) est introduite dans la bague d'étanchéité (2).

12. Segment de piston selon l'une quelconque des revendications précédentes, **caractérisé en ce que** la bague d'étanchéité (2) présente, au niveau de la surface périphérique extérieure (2k), une rainure de détente de pression (2m) s'étendant dans la direction périphérique.

13. Segment de piston selon l'une quelconque des revendications 1 à 12, **caractérisé en ce que** la bague d'étanchéité (2) et la fermeture d'aboutement (3) sont fabriquées en matériaux différents, le matériau de la bague d'étanchéité (2) présentant un module d'élasticité en flexion au moins plus bas de 10 % que celui de la fermeture d'aboutement (3).

14. Segment de piston selon la revendication 13, **caractérisé en ce que** la bague d'étanchéité (2) se compose de métal et **en ce que** la fermeture d'aboutement (3) se compose de plastique.

15. Segment de piston selon la revendication 13, **caractérisé en ce que** la bague d'étanchéité (2) se compose de polymère et **en ce que** la fermeture d'aboutement (3) se compose de PEEK.
